# EUROPEAN PATENT SPECIFICATION

(11) **EP 4 059 757 B1**
(45) Date of publication and mention of the grant of the patent: **16.07.2025**
(21) Application number: 21162887.0
(22) Date of filing: 16.03.2021
(51) Int. Cl.: B60K 28/06, B60W 10/08, B60W 10/30, B60W 50/08, B60W 50/14, F02N 11/00

(54) **A HEAVY-DUTY VEHICLE CONFIGURABLE IN A STAND-BY MODE OF OPERATION**
IN EINEM BEREITSCHAFTSMODUS KONFIGURIERBARES SCHWERLASTFAHRZEUG
VÉHICULE LOURD CONFIGURABLE DANS UN MODE DE FONCTIONNEMENT D'ATTENTE

(43) Date of publication of application: 21.09.2022
(73) Proprietor: VOLVO TRUCK CORPORATION, 405 08 Göteborg (SE)
(72) Inventor: LARSSON, Lena, 426 74 Västra Frölunda (SE)
(74) Representative: Zacco Sweden AB

(56) References cited:
- WO-A1-2009/092157
- US-A1- 2004 262 995
- US-A1- 2017 305 234

## Description

### TECHNICAL FIELD

The present invention relates to methods and control units for energy efficient control of heavy-duty vehicles, such as rigid trucks and semi-trailers comprising a plurality of vehicle units. The invention can, however, also be applied in other types of heavy-duty vehicles, e.g., in construction equipment, forestry vehicles, and mining vehicles.

### BACKGROUND

Heavy-duty vehicles are designed to carry heavy loads, sometimes hazardous goods, and often on public roads. They are therefore associated with stricter safety requirements compared to, e.g., regular passenger cars. Rigorous pre-launch procedures are often required to be performed by a driver or technician before the vehicle is allowed to be put into motion. Some drivers are reluctant to turn off their vehicles during periods of inactivity since these time-consuming pre-launch procedures then need to be repeated once the vehicle is started up again.

Many drivers also leave their motors running when the vehicle is stationary since this way the cab temperature is maintained even in cold climates, and the batteries of the vehicle are not exhausted. The motor is often also kept running in hot climates to keep air-conditioning (AC) going and the temperature in cold storage compartments sufficiently low. However, this is an energy inefficient way to operate a heavy-duty vehicle, and therefore undesired.

US 2004/0262995 A1 describes an engine control system which is configured to automatically start a combustion engine in response to a number of enabler signals indicative of, e.g., low battery voltage, low cab temperature and/or low engine temperature. This allows a driver to turn off the engine without worrying for, e.g., the cab temperature dropping too low and the battery voltage running low. However, further improvement in energy efficient vehicle control is desired.

US2017/0305234 A1 discloses a system for reducing the idling time of a vehicle, where the system is arranged to start an engine of the vehicle if certain conditions are met, such as low battery voltage or low engine temperature.

### SUMMARY

It is an object of the present invention to provide techniques which improve energy efficiency in heavy-duty vehicles. This object is at least in part obtained by a control unit for a heavy-duty vehicle. The control unit is arranged to control the vehicle according to a mode of operation selected from at least three different modes of operation, where the mode of operation is configurable by a driver via a mode selection device. A first mode of operation is a mode of operation where the vehicle is in an inactivated state, i.e., turned off. A second mode of operation is a stand-by mode of operation where the vehicle is in an active state, and where the control unit is arranged to turn off a combustion engine of the vehicle in case a vehicle state meets a pre-determined power-down criterion. This mode of operation is an introduced mode of operation where the vehicle is deemed active from many sub-systems, such as cab temperature control and the like, but where the engine is turned off by the vehicle control system in case it is not needed. A third mode of operation is a mode of operation where the vehicle is in the active state, and wherein the third mode of operation corresponds to a non-stand-by regular active state of the vehicle. In this state the vehicle may enter into a state of motion, i.e., accelerate into motion. The control unit is configured to require manual input from a driver prior to transitioning into the third mode of operation from the second mode of operation. This increases overall vehicle safety, since it reduces the chance of involuntarily entering the third mode of operation where the vehicle may be brought into motion

This way the drawbacks of turning of the ignition during periods of inactivity are largely eliminated, since the driver will not experience any loss of function due to placing the vehicle in the second mode of operation compared to leaving the vehicle in the third mode of operation where the engine is running. The driver is thus more likely to voluntarily place the vehicle in the second mode of operation compared to turning off the engine of a legacy heavy-duty vehicle.

According to aspects, the control unit is required to successfully execute a pre-launch procedure prior to entering the second mode of operation or the third mode of operation from the first mode of operation. This pre-launch procedure may involve, e.g., technical verifications of vehicle system functions, driver authentication of various forms such as a verification of driver credentials and/or driver authorization, and potentially also alcohol tests of the driver. Notably, the pre-launch procedure is required when transiting from the first mode to the second and third mode, not when entering the third mode of operation from the second mode of operation. l.e., the control unit is arranged to transition between the second mode of operation and the third mode of operation without successfully executing the pre-launch procedure.

According to aspects, the vehicle is required to be in a stationary state when in the second mode of operation. Being in a stationary state means that vehicle wheels are not moving. This may be ensured by, e.g., activating service brakes and/or parking brakes of the vehicle. Being in a stationary state optionally also comprises any auxiliary equipment being inactivated, such as a crane not being used.

According to aspects, the control unit is arranged to inactivate a vehicle motion management (VMM) function when in the second mode of operation. Computational functions such as vehicle motion management normally consume a significant amount of electrical energy. By inactivating such signal processing functions, or at least parts of such functions, energy consumption by the vehicle is reduced. The circuitry of the signal processing units may be placed in sleep mode when the vehicle is in the second mode of operation, where the sleep mode is an energy conserving mode of operation of the circuitry.

According to aspects, the control unit is configured to automatically transition into the second mode of operation from the third mode of operation in case the vehicle has been stationary for a pre-determined period of time. This means that even vehicles operated by drivers that are reluctant to place the vehicle in the second mode of operation will eventually transition into the second mode of operation, which is an advantage.

According to aspects, the pre-determined power-down criterion comprises any of: cab temperature, electrical energy storage (ESS) state of charge, trailer compartment temperature, and combustion engine temperature. Thus, the control unit will not leave the motor inactive if there is a need for having the motor running by any of the above listed sub-systems, which is an advantage. The driver may place the vehicle in the second mode of operation knowing that important vehicle subsystems will not be affected by the change in mode of operation.

According to aspects, the control unit is arranged to indicate a current mode of operation via an in-cabin display. Thus, the driver easily sees what state the vehicle is in, which is an advantage. The driver also knows the reason for the engine suddenly turning on and off during a period of inactivity.

There is also disclosed herein methods, computer programs, computer readable media, computer program products, and vehicles associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention as defined by the appended claims.

### BRIEF DESCRIPTION OF THE DRAWINGS

With reference to the appended drawings, below follows a more detailed description of embodiments of the invention cited as examples. In the drawings:
- Figure 1: schematically illustrates a heavy-duty vehicle;
- Figure 2: illustrates a mode selection device connected to a vehicle control unit;
- Figure 3: illustrates a procedure for vehicle operation;
- Figures 4-5: show example user interfaces;
- Figure 6: is a flow chart illustrating methods;
- Figure 7: schematically illustrates a control unit; and
- Figure 8: shows an example computer program product.

### DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

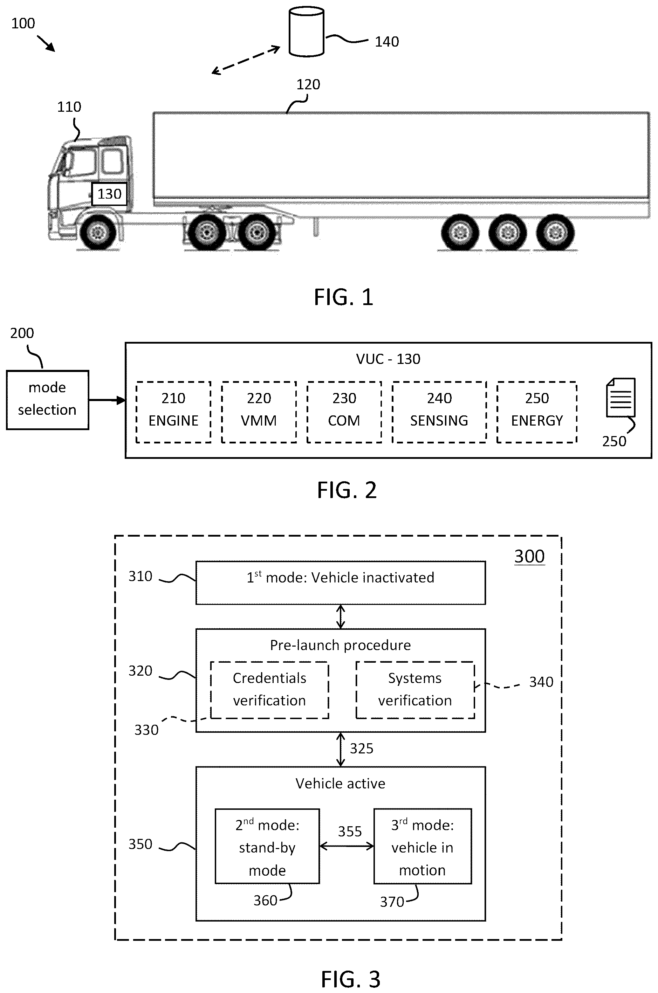

Figure 1 illustrates a heavy-duty vehicle 100. This particular example comprises a tractor unit 110 which is arranged to tow a trailer unit 120. The tractor 110 comprises a vehicle control unit (ECU) 130 arranged to control various functions of the vehicle 100. For instance, the ECU may be arranged to perform a vehicle motion management (VMM) function comprising control of wheel slip, vehicle unit stability, and so on. The ECU may be communicatively coupled, e.g., via wireless link, to a remote server 140. This remote server may be arranged to perform various configurations of the ECU, and to provide various forms of data to the ECU 130.

In order to start the vehicle 100, a driver may need to perform certain pre-launch tasks, such as verifying different technical functions on the vehicle, and perhaps disengaging an alcohol interlock device. An alcohol interlock device is a device which requires the driver to blow into a mouthpiece on the device before starting or continuing to operate the vehicle. If the resultant breath-alcohol concentration analyzed result is greater than the programmed blood alcohol concentration (which varies between countries), the device prevents the engine of the vehicle 100 from being started, thus immobilizing the vehicle.

In cold climates, the drivers have a tendency to leave the motor running during periods of inactivity when the vehicle is stationary, e.g., waiting for cargo to be loaded waiting in queue or to embark on a ferry. This is done in order to prevent a temperature drop inside the cab, and/or a discharge of the battery. Also, if the ambient temperature is very low, it may be hard to start the engine again if its temperature has gone critically low.

The same holds true for vehicles operating in hot climates, where drivers have a tendency to leave the motor running in order to keep the AC operational, and to keep the temperature in cold storage compartments at the required temperature.

A situation where drivers leave the engine running during periods of inactivity when the vehicle is stationary is undesired, for both environmental as well as energy efficiency and cost efficiency reasons. A purpose of the present invention is to present a system which allows the drivers to "turn off" the vehicle without the vehicle leaving an active mode of operation. Thus, there is a reduced incentive for the drivers to leave their motors running during periods of inactivity. A benefit of the techniques disclosed herein is a reduced energy consumption.

The present invention describes a vehicle control system which encourages drivers to place the vehicle in a type of stand-by mode of operation, where the vehicle is considered as being in an active state of operation, but where the ECU 130 is allowed to turn off the engine and other systems if certain vehicle state criteria are fulfilled. Since the vehicle is considered to be in an active state, there is no requirement to perform the pre-launch procedures when exiting the stand-by mode of operation.

Figure 2 illustrates a mode selection device 200 connected to the ECU 130 of the vehicle 100. This mode selection device is a manual control device which the driver can use to configure a mode of operation of the vehicle into one out of a plurality of modes of operation. The mode selection device may be realized by a control knob or button, e.g., as a start button or ignition key, but with an extra mode of operation indicating a stand-by mode of operation. In this stand-by mode of operation, the vehicle control system is active. However, it is operating with reduced functionality, and the ECU is allowed to turn off the engine 210 in case the vehicle state meets a set of pre-determined criteria 250, such as if the battery is sufficiently charged, and the temperatures of the vehicle can be kept within acceptable levels without the engine running.

The ECU is optionally also allowed to deactivate other vehicle systems when operating in the stand-by mode of operation. For instance, the ECU may deactivate the VMM function comprising computationally intensive functions such as vehicle motion estimation, vehicle motion control functions, and vehicle motion prediction. Other functions such as various communications functions are preferably maintained, such as the communication link to the remote server 140. The vehicle sensor systems 240 and energy management systems 250 are preferably also kept on-line, at least in part since these systems may be required to be active also during periods of inactivity when the vehicle is stationary. Also, it may take some time to start up these systems and verify full functionality before setting the vehicle into motion.

Figure 3 illustrates an example control unit 300 for a heavy-duty vehicle such as the vehicle 100, which may be comprised as a part of the ECU 130. The control unit 300 is arranged to control the vehicle according to a mode of operation selected from at least three different modes of operation, where the currently active mode of operation is configurable by a driver via the mode selection device 200. A first mode of operation 310 is a mode of operation where the vehicle is in an inactivated state, i.e., when the vehicle is turned off or otherwise fully inactivated. This mode of operation can be entered into, e.g., when the vehicle is parked for an extended time duration. A second mode of operation 360 is the above-mentioned stand-by mode of operation where the vehicle is in an active state 350, and where the control unit 300 is arranged to turn off a combustion engine 210 of the vehicle 100 in case a vehicle state meets a pre-determined power-down criterion 250. Some example pre-determined power-down criteria is listed in US 2004/0262995 A1. The power-down criteria may be configured at the factory, or via software update, possibly via the wireless link to the remote server 140. A third mode of operation 370 is a mode of operation where the vehicle 100 is in the active state, i.e., in this state the vehicle may be put in motion, and the VMM function (if present) is active. This mode corresponds to the regular active state of a vehicle.

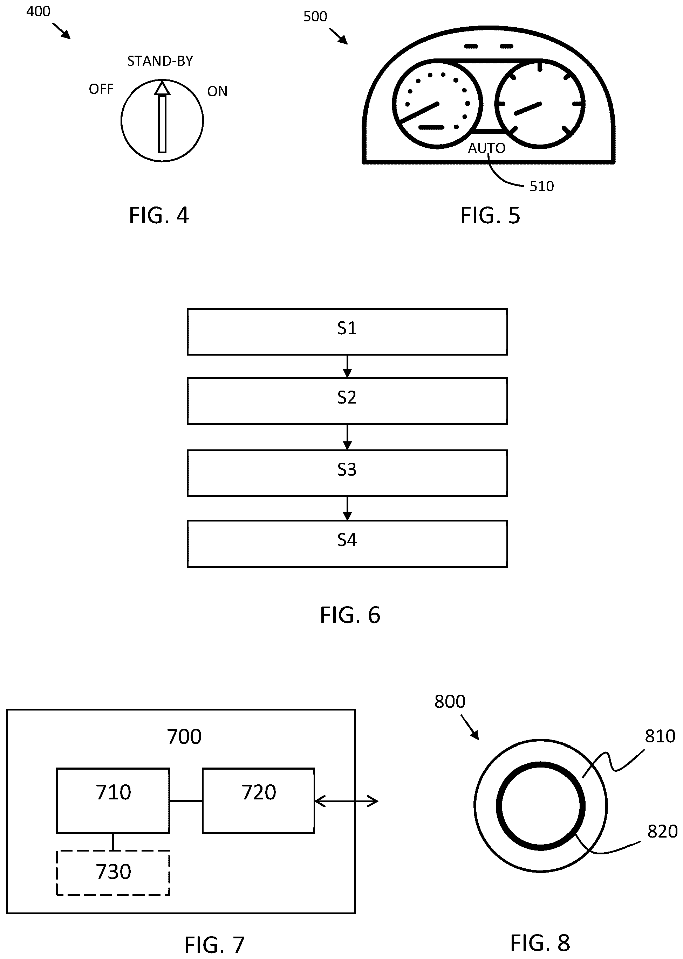

An example 400 of the mode selection device 200 is illustrated in Figure 4. This example mode selection device comprises a knob or ignition key arrangement which can be set in three different configurations, one configuration corresponds to turning the vehicle off (OFF), one configuration corresponds to turning the vehicle on (ON), and one configuration corresponds to placing the vehicle in the stand-by mode of operation (STAND-BY). Other example mode selection devices may comprise touchscreens, voice command, or other input options.

Optionally, as indicated in Figure 3, the control unit 130, 300 is required to successfully execute a pre-launch procedure 320 prior to entering 325 into the second mode of operation 360 or the third mode of operation 370, i.e., the active state. The pre-launch procedure 320 may, e.g., comprise a verification of driver credentials and/or driver authorization, such as an identification check and/or an alcohol interlock system. The pre-launch procedure 330 may also comprise a verification of technical vehicle systems function 340, which may be annoyingly time consuming in some cases.

A driver of the vehicle 100 contemplating leaving the vehicle running in order to, e.g., avoid having to redo a pre-launch procedure or experience a temperature drop in the cabin, can now instead place the vehicle in the stand-by mode of operation which, essentially, is the same thing as leaving the motor running. Thus, there is much less incentive in leaving the motor running since the stand-by state has most of the properties of the third mode of operation but is a much more energy efficient and environmentally friendly mode of operation.

According to some aspects, the control unit 130, 300 is arranged to transition 355 between the second mode of operation 360 and the third mode of operation 370 without requiring successful execution of the pre-launch procedure 320. Thus, a driver may freely configure the vehicle in the second mode of operation (stand-by), and then back to the third mode of operation (fully operational mode), without having to execute any of the pre-lunch procedures that may be required when transitioning from the first mode of operation 3210 into the second or third mode of operation, i.e., the active state 350.

The stand-by mode of operation may be associated with constraints on vehicle state. This means that the stand-by mode of operation will optionally only be available under certain circumstances. For instance, the stand-by mode of operation may only be allowed if the vehicle 100 is in a stationary state where the vehicle is not moving relative to the ground, perhaps with an engaged parking brake, or where position sensors indicate that the vehicle is truly stationary.

The VMM functionality mentioned above may involve rather complex computations involving powerful processing units. Such signal processing operations may consume significant amounts of energy, i.e., draw significant amounts of current from the vehicle electrical energy storage system (ESS). Vehicle energy efficiency can be further improved if the VMM function, or parts of the VMM function, are inactivated when the ECU 130 controls the vehicle according to the second mode of operation, i.e., the stand-by mode of operation. In other words, the control unit 130, 300 is optionally arranged to inactivate a VMM function of the vehicle 100, or parts of theVMM function, when the vehicle is controlled in the second mode of operation 360.

Advantageously, the VMM function 220 may be arranged to trigger a software update procedure when the vehicle is in the second mode of operation. This is an advantage since the VMM has time to perform the software update, and it may consume energy since the control unit will turn the engine back on in case ESS state of charge reaches too low levels. The vehicle may be prevented from immediately entering into the third mode of operation from the second mode of operation until the software update has been completed. Thus, it may be preferred to only execute minor software updates and downloads of data in this manner.

The control unit may optionally also be configured to automatically transition the vehicle operation into the second mode of operation from the third mode of operation in case the vehicle has been stationary for a pre-determined period of time. Thus, if the driver still leaves the engine running for an extended period of time despite the vehicle being inactive and stationary, then the control unit may automatically, and without driver input, transition the vehicle control into the second mode of operation. This transition may be conditioned on the vehicle not being located in vicinity of some given type of environment such as in the middle of a road or the like. The transition should of course also be prevented in case some auxiliary equipment is in use, like a crane, unless this operation is deemed supportable by the charge in the ESS. The control unit 130, 300 may further be configured to require manual input from a driver prior to transitioning into the third mode of operation from the second mode of operation. Thus, if the driver keeps the vehicle 100 stationary for enough time, such that the control unit automatically transfers vehicle control into the second mode of operation, the vehicle may request driver input via the mode selection device 200 before the vehicle is allowed to transition into the third mode of operation and be put into motion again.

As discussed at length in US 2004/0262995 A1, the pre-determined power-down criterion optionally comprises any of: cab temperature, electrical energy storage (ESS) state of charge, trailer compartment temperature, and combustion engine temperature.

Figure 5 schematically illustrates an in-cabin display, such as a dashboard display. The control unit 130, 300 is arranged to indicate the current mode of operation 510 via the in-cabin display 500.

Figure 6 is a flow chart illustrating methods which summarize the above discussions. There is illustrated a computer implemented method, performed by a control unit 130, 300 arranged to control a heavy-duty vehicle 100 according to a mode of operation selected from at least three different modes of operation. The method comprises defining S1 a first mode of operation 310 as a mode of operation where the vehicle is in an inactivated state, defining S2 a second mode of operation 360 as a stand-by mode of operation where the vehicle is in an active state 350, and where the control unit 130, 300 is arranged to turn off a combustion engine of the vehicle 100 in case a vehicle state meets a pre-determined power-down criterion, defining S3 a third mode of operation 370 as a mode of operation where the vehicle 100 is in the active state, and configuring S3 the mode of operation based on driver input via a mode selection device 200, 400.

Figure 7 schematically illustrates, in terms of a number of functional units, the components of a control unit 800 according to embodiments of the discussions herein, such as the ECU 130. This control unit 700 may be comprised in the articulated vehicle 1. Processing circuitry 710 is provided using any combination of one or more of a suitable central processing unit CPU, multiprocessor, microcontroller, digital signal processor DSP, etc., capable of executing software instructions stored in a computer program product, e.g. in the form of a storage medium 830. The processing circuitry 710 may further be provided as at least one application specific integrated circuit ASIC, or field programmable gate array FPGA.

Particularly, the processing circuitry 710 is configured to cause the control unit 700 to perform a set of operations, or steps, such as the methods discussed in connection to Figure 6. For example, the storage medium 730 may store the set of operations, and the processing circuitry 710 may be configured to retrieve the set of operations from the storage medium 730 to cause the control unit 700 to perform the set of operations. The set of operations may be provided as a set of executable instructions. Thus, the processing circuitry 710 is thereby arranged to execute methods as herein disclosed.

The storage medium 730 may also comprise persistent storage, which, for example, can be any single one or combination of magnetic memory, optical memory, solid state memory or even remotely mounted memory.

The control unit 700 may further comprise an interface 720 for communications with at least one external device. As such the interface 720 may comprise one or more transmitters and receivers, comprising analogue and digital components and a suitable number of ports for wireline or wireless communication.

The processing circuitry 710 controls the general operation of the control unit 700, e.g., by sending data and control signals to the interface 720 and the storage medium 830, by receiving data and reports from the interface 720, and by retrieving data and instructions from the storage medium 830. Other components, as well as the related functionality, of the control node are omitted in order not to obscure the concepts presented herein.

Figure 8 illustrates a computer readable medium 810 carrying a computer program comprising program code means 820 for performing the methods illustrated in Figure 6, when said program product is run on a computer. The computer readable medium and the code means may together form a computer program product 800.

## Claims

1. A control unit (130, 300) for a heavy-duty vehicle (100), where the control unit (130, 300) is arranged to control the vehicle (100) according to a mode of operation selected from at least three different modes of operation, where the mode of operation is configurable by a driver via a mode selection device (200, 400),
where a first mode of operation (310) is a mode of operation where the vehicle is in an inactivated state,
where a second mode of operation (360) is a stand-by mode of operation where the vehicle is in an active state (350), and where the control unit (130, 300) is arranged to turn off a combustion engine of the vehicle (100) in case a vehicle state meets a pre-determined power-down criterion, and
where a third mode of operation (370) is a mode of operation where the vehicle (100) is in the active state, and wherein the third mode of operation (370) corresponds to a non-stand-by regular active state of the vehicle, and
where the control unit (130, 300) is configured to require manual input from a driver prior to transitioning into the third mode of operation from the second mode of operation.

2. The control unit (130, 300) according to claim 1, where the control unit (130, 300) is required to successfully execute a pre-launch procedure (320) prior to entering (325) the second mode of operation (360) or the third mode of operation (370) from the first mode of operation (310).

3. The control unit (130, 300) according to claim 2, where the control unit (130, 300) is arranged to transition (355) between the second mode of operation (360) and the third mode of operation (370) without successfully executing the pre-launch procedure (320).

4. The control unit (130, 300) according to any of claims 2-3, where the pre-launch procedure (330) comprises a verification of driver credentials and/or driver authorization.

5. The control unit (130, 300) according to any of claims 2-4, where the pre-launch procedure (330) comprises a verification of vehicle systems function (340).

6. The control unit (130, 300) according to any previous claim, where the vehicle (100) is required to be in a stationary state when in the second mode of operation (360).

7. The control unit (130, 300) according to claim 6, where the control unit (130, 300) is arranged to inactivate a vehicle motion management, VMM, function when in the second mode of operation (360).

8. The control unit (130, 300) according to any previous claim, where the control unit (130, 300) is configured to automatically transition into the second mode of operation from the third mode of operation in case the vehicle has been stationary for a pre-determined period of time.

9. The control unit (130, 300) according to any previous claim, where the pre-determined power-down criterion comprises any of: cab temperature, electrical energy storage, ESS, state of charge, trailer compartment temperature, combustion engine temperature.

10. The control unit (130, 300) according to any previous claim, where the control unit (130, 300) is arranged to indicate a current mode of operation via an in-cabin display (500).

11. The control unit (130, 300) according to any previous claim, arranged to trigger a software update function when the vehicle is in the second mode of operation.

12. A vehicle (100) comprising the control unit (130, 300) according to any of claims 1-11.

13. A computer implemented method, performed by a control unit (130, 300) arranged to control a heavy-duty vehicle (100) according to a mode of operation selected from at least three different modes of operation, the method comprising
defining (S1) a first mode of operation (310) as a mode of operation where the vehicle is in an inactivated state,
defining (S2) a second mode of operation (360) as a stand-by mode of operation where the vehicle is in an active state (350), and where the control unit (130, 300) is arranged to turn off a combustion engine of the vehicle (100) in case a vehicle state meets a pre-determined power-down criterion,
defining (S3) a third mode of operation (370) as a mode of operation where the vehicle (100) is in the active state, the third mode of operation (370) corresponding to a non-stand-by regular active state of the vehicle, and
configuring (S3) the mode of operation based on driver input via a mode selection device (200, 400), where the transitioning into the third mode of operation from the second mode of operation requires prior manual input from a driver.

14. A computer program (820) comprising program code means for performing the steps of claim 13 when said program is run on a computer or on processing circuitry (710) of a control unit (700).

15. A computer readable medium (810) carrying a computer program (820) comprising program code means for performing the steps of claim 13 when said program product is run on a computer or on processing circuitry (710) of a control unit (700).

## Patentansprüche

1. Steuereinheit (130, 300) für ein Schwerlastfahrzeug (100), wobei die Steuereinheit (130, 300) dazu eingerichtet ist, das Fahrzeug (100) gemäß einem Betriebsmodus zu steuern, der aus mindestens drei verschiedenen Betriebsmodi ausgewählt ist, wobei der Betriebsmodus durch einen Fahrer über eine Modusauswahlvorrichtung (200, 400) konfigurierbar ist,
wobei ein erster Betriebsmodus (310) ein Betriebsmodus ist, in dem sich das Fahrzeug in einem deaktivierten Zustand befindet, wobei ein zweiter Betriebsmodus (360) ein Bereitschaftsmodus ist, in dem sich das Fahrzeug in einem aktiven Zustand (350) befindet, und wobei die Steuereinheit (130, 300) dazu eingerichtet ist, einen Verbrennungsmotor des Fahrzeugs (100) abzuschalten, wenn ein Fahrzeugzustand ein vorbestimmtes Ausschaltkriterium erfüllt, und
wobei ein dritter Betriebsmodus (370) ein Betriebsmodus ist, in dem sich das Fahrzeug (100) in dem aktiven Zustand befindet, und wobei der dritte Betriebsmodus (370) einem regulären, aktiven, Nichtbereitschaftszustand des Fahrzeugs entspricht und
wobei die Steuereinheit (130, 300) konfiguriert ist, um eine manuelle Eingabe von einem Fahrer vor dem Wechsel von dem zweiten Betriebsmodus in den dritten Betriebsmodus zu verlangen.

2. Steuereinheit (130, 300) nach Anspruch 1, wobei die Steuereinheit (130, 300) vor dem Eintritt (325) in den zweiten Betriebsmodus (360) oder den dritten Betriebsmodus (370) aus dem ersten Betriebsmodus (310) eine Vorstartprozedur (320) erfolgreich ausführen muss.

3. Steuereinheit (130, 300) nach Anspruch 2, wobei die Steuereinheit (130, 300) dazu eingerichtet ist, zwischen dem zweiten Betriebsmodus (360) und dem dritten Betriebsmodus (370) zu wechseln (355), ohne die Vorstartprozedur (320) erfolgreich auszuführen.

4. Steuereinheit (130, 300) nach einem der Ansprüche 2-3, wobei die Vorstartprozedur (330) eine Verifizierung von Fahrerberechtigungsnachweisen und/oder Fahrerautorisierungen umfasst.

5. Steuereinheit (130, 300) nach einem der Ansprüche 2-4, wobei die Vorstartprozedur (330) eine Verifizierung der Fahrzeugsystemfunktion (340) umfasst.

6. Steuereinheit (130, 300) nach einem der vorhergehenden Ansprüche, wobei sich das Fahrzeug (100) in dem zweiten Betriebsmodus (360) in einem stationären Zustand befinden muss.

7. Steuereinheit (130, 300) nach Anspruch 6, wobei die Steuereinheit (130, 300) dazu eingerichtet ist, eine Fahrzeugbewegungsverwaltungs(vehicle motion management - VMM)-Funktion zu deaktivieren, wenn es sich in dem zweiten Betriebsmodus (360) befindet.

8. Steuereinheit (130, 300) nach einem der vorhergehenden Ansprüche, wobei die Steuereinheit (130, 300) dazu konfiguriert ist, automatisch von dem dritten Betriebsmodus in den zweiten Betriebsmodus zu wechseln, wenn das Fahrzeug für einen vorbestimmten Zeitraum stationär war.

9. Steuereinheit (130, 300) nach einem der vorhergehenden Ansprüche, wobei das vorbestimmte Ausschaltkriterium eines von Folgendem umfasst: Temperatur in der Fahrerkabine, Ladezustand des elektrischen Energiespeichers (ESS), Temperatur in dem Anhängerraum, Temperatur des Verbrennungsmotors.

10. Steuereinheit (130, 300) nach einem der vorhergehenden Ansprüche, wobei die Steuereinheit (130, 300) dazu eingerichtet ist, einen aktuellen Betriebsmodus über eine Fahrerkabinenanzeige (500) anzugeben.

11. Steuereinheit (130, 300) nach einem der vorhergehenden Ansprüche, die angeordnet ist, um eine Softwareaktualisierungsfunktion auszulösen, wenn sich das Fahrzeug in dem zweiten Betriebsmodus befindet.

12. Fahrzeug (100), umfassend die Steuereinheit (130, 300) nach einem der Ansprüche 1-11.

13. Computerimplementiertes Verfahren, das durch eine Steuereinheit (130, 300) durchgeführt wird, die dazu eingerichtet ist, ein Schwerlastfahrzeug (100) gemäß einem Betriebsmodus zu steuern, der aus mindestens drei verschiedenen Betriebsmodi ausgewählt ist, wobei das Verfahren Folgendes umfasst:
Definieren (S1) eines ersten Betriebsmodus (310) als einen Betriebsmodus, in dem sich das Fahrzeug in einem deaktivierten Zustand befindet,
Definieren (S2) eines zweiten Betriebsmodus (360) als ein Bereitschaftsmodus, in dem sich das Fahrzeug in einem aktiven Zustand (350) befindet, und wobei die Steuereinheit (130, 300) dazu eingerichtet ist, einen Verbrennungsmotor des Fahrzeugs (100) abzuschalten, wenn ein Fahrzeugzustand ein vorbestimmtes Ausschaltkriterium erfüllt,
Definieren (S3) eines dritten Betriebsmodus (370) als einen Betriebsmodus, in dem sich das Fahrzeug (100) in dem aktiven Zustand befindet, wobei der dritte Betriebsmodus (370) einem regulären, aktiven, Nichtbereitschaftszustand des Fahrzeugs entspricht, und
Konfigurieren (S3) des Betriebsmodus basierend auf Fahrereingaben über eine Modusauswahlvorrichtung (200, 400), wobei der Wechsel von dem zweiten Betriebsmodus in den dritten Betriebsmodus eine vorherige manuelle Eingabe durch einen Fahrer verlangt.

14. Computerprogramm (820), umfassend Programmcodemittel zum Durchführen der Schritte nach Anspruch 13, wenn das Programm auf einem Computer oder einer Verarbeitungsschaltung (710) einer Steuereinheit (700) ausgeführt wird.

15. Computerlesbares Medium (810), das ein Computerprogramm (820) trägt, das Programmcodemittel zum Ausführen der Schritte nach Anspruch 13 umfasst, wenn das Programmprodukt auf einem Computer oder einer Verarbeitungsschaltung (710) einer Steuereinheit (700) ausgeführt wird.

## Revendications

1. Unité de commande (130, 300) pour un véhicule lourd (100), l'unité de commande (130, 300) étant agencée pour commander le véhicule (100) selon un mode de fonctionnement sélectionné parmi au moins trois modes de fonctionnement différents, le mode de fonctionnement étant configurable par un entraînement via un dispositif de sélection de mode (200, 400),
un premier mode de fonctionnement (310) étant un mode de fonctionnement dans lequel le véhicule est dans un état inactivé,
un deuxième mode de fonctionnement (360) étant un mode de fonctionnement en veille dans lequel le véhicule est dans un état actif (350), et l'unité de commande (130, 300) étant agencée pour éteindre un moteur à combustion du véhicule (100) si l'état du véhicule répond à un critère de mise hors tension prédéterminé, et
un troisième mode de fonctionnement (370) étant un mode de fonctionnement dans lequel le véhicule (100) est actif, le troisième mode de fonctionnement (370) correspond à un état actif régulier hors veille du véhicule, et
dans laquelle l'unité de commande (130, 300) est configurée pour exiger une entrée manuelle d'un entraînement avant de passer du deuxième mode de fonctionnement au troisième mode de fonctionnement.

2. Unité de commande (130, 300) selon la revendication 1, dans laquelle l'unité de commande (130, 300) doit exécuter avec succès une procédure de pré-lancement (320) avant d'entrer (325) dans le deuxième mode de fonctionnement (360) ou le troisième mode de fonctionnement (370) à partir du premier mode de fonctionnement (310).

3. Unité de commande (130, 300) selon la revendication 2, dans laquelle l'unité de commande (130, 300) est agencée pour effectuer une transition (355) entre le deuxième mode de fonctionnement (360) et le troisième mode de fonctionnement (370) sans exécuter avec succès la procédure de pré-lancement (320).

4. Unité de commande (130, 300) selon l'une quelconque des revendications 2 à 3, dans laquelle la procédure de pré-lancement (330) comprend une vérification des informations d'identification de l'entraînement et/ou de l'autorisation de l'entraînement.

5. Unité de commande (130, 300) selon l'une quelconque des revendications 2 à 4, dans laquelle la procédure de pré-lancement (330) comprend une vérification du fonctionnement des systèmes du véhicule (340).

6. Unité de commande (130, 300) selon l'une quelconque des revendications précédentes, dans laquelle le véhicule (100) doit être dans un état stationnaire lorsqu'il est dans le deuxième mode de fonctionnement (360).

7. Unité de commande (130, 300) selon la revendication 6, dans laquelle l'unité de commande (130, 300) est agencée pour désactiver une fonction de gestion de mouvement de véhicule, VMM, lorsqu'elle est dans le deuxième mode de fonctionnement (360).

8. Unité de commande (130, 300) selon l'une quelconque des revendications précédentes, dans laquelle l'unité de commande (130, 300) est configurée pour passer automatiquement du troisième mode de fonctionnement au deuxième mode de fonctionnement dans le cas où le véhicule est resté stationnaire pendant une période de temps prédéterminée.

9. Unité de commande (130, 300) selon l'une quelconque des revendications précédentes, dans laquelle le critère de mise hors tension prédéterminé comprend l'un quelconque des éléments suivants : la température de la cabine, le stockage d'énergie électrique, ESS, l'état de charge, la température du compartiment de la remorque, la température du moteur à combustion.

10. Unité de commande (130, 300) selon l'une quelconque des revendications précédentes, dans laquelle l'unité de commande (130, 300) est agencée pour indiquer un mode de fonctionnement actuel via un affichage en cabine (500).

11. Unité de commande (130, 300) selon l'une quelconque des revendications précédentes, agencée pour déclencher une fonction de mise à jour logicielle lorsque le véhicule est dans le deuxième mode de fonctionnement.

12. Véhicule (100) comprenant l'unité de commande (130, 300) selon l'une quelconque des revendications 1 à 11.

13. Procédé mis en œuvre par ordinateur, effectué par une unité de commande (130, 300) agencée pour commander un véhicule lourd (100) selon un mode de fonctionnement sélectionné parmi au moins trois modes de fonctionnement différents, le procédé comprenant
la définition (S1) d'un premier mode de fonctionnement (310) comme mode de fonctionnement où le véhicule est dans un état inactivé,
la définition (S2) d'un deuxième mode de fonctionnement (360) comme mode de fonctionnement de veille où le véhicule est dans un état actif (350), et où l'unité de commande (130, 300) est agencée pour éteindre un moteur à combustion du véhicule (100) si l'état du véhicule répond à un critère de mise hors tension prédéterminé,
la définition (S3) d'un troisième mode de fonctionnement (370) comme mode de fonctionnement où le véhicule (100) est dans l'état actif, le troisième mode de fonctionnement (370) correspondant à un état actif régulier hors veille du véhicule, et
la configuration (S3) du mode de fonctionnement en fonction de l'entrée du conducteur via un dispositif de sélection de mode (200, 400), dans laquelle la transition vers le troisième mode de fonctionnement à partir du deuxième mode de fonctionnement nécessite une entrée manuelle préalable d'un conducteur.

14. Programme informatique (820) comprenant des moyens de code de programme pour effectuer les étapes de la revendication 13 lorsque ledit programme est exécuté sur un ordinateur ou sur un circuit de traitement (710) d'une unité de commande (700).

15. Support lisible par ordinateur (810) portant un programme informatique (820) comprenant des moyens de code de programme pour effectuer les étapes de la revendication 13 lorsque ledit produit de programme est exécuté sur un ordinateur ou sur un circuit de traitement (710) d'une unité de commande (700).
